# EUROPÄISCHE PATENTSCHRIFT

(11) **EP 2 299 366 B1**
(45) Veröffentlichungstag und Bekanntmachung des Hinweises auf die Patenterteilung: **05.03.2014**
(21) Anmeldenummer: 10401092.1
(22) Anmeldetag: 28.06.2010
(51) Int. Cl.: G06F 13/42, H04B 3/54

(54) **Bussystem sowie Verfahren zur Datenübertragung**
Bus system and method for data communication
Bus système et procédé de communication de données

(30) Priorität: 20.07.2009 DE 102009026207
(43) Veröffentlichungstag der Anmeldung: 23.03.2011
(73) Patentinhaber: Wincor Nixdorf International GmbH, 33106 Paderborn (DE)
(72) Erfinder: Bollmeier, Marcus, 33758 Schloss Holte-Stukenbrock (DE); Marx, Eduard, 32130 Enger (DE)
(74) Vertreter: Richly, Erik

(56) Entgegenhaltungen:
- EP-A2- 0 929 171
- DE-A1-102004 046 186
- US-A1- 2008 013 637
- US-A1- 2008 189 459

## Beschreibung

Die Erfindung betrifft ein Bussystem für die Übertragung von Daten zwischen mindestens einem als eine Master-Baueinheit ausgebildeten ersten Busteilnehmer und mindestens einem als eine Slave-Baueinheit ausgebildeten zweiten Busteilnehmer, wobei die Busteilnehmer jeweils über einen Anschluss für eine Datenleitung, einen Anschluss für eine Taktleitung und einen Anschluss für eine Spannungsversorgungsleitung verfügen.

Bussysteme für die Übertragung von Daten zwischen unterschiedlichen Busteilnehmern sind bekannt. Beispielsweise kann ein I²C-Bus (Inter-Integrated Circuit) zur geräteinternen Datenübertragung zwischen Kontrollerbaueinheiten und Peripheriebaueinheiten eingesetzt werden. Der I²C-Bus ist ein serieller, synchroner Zweidrahtbus, der über eine Datenleitung und eine Taktleitung verfügt. Zusätzlich ist eine Versorgungsleitung zur Bereitstellung einer Versorgungsspannung vorgesehen. Die Datenübertragung erfolgt bidirektional nach dem Master-Slave-Prinzip, wobei eine Master-Baueinheit sendet und alle Slave-Baueinheiten empfangen können. Das I²C-Protokoll sieht aber auch einen Multimaster-Betrieb vor, wonach zwar mehrere Master-Baueinheiten gleichzeitig senden können, aber nach der Buszuteilung immer nur eine Master-Baueinheit das Senderecht behält. In komplexen technischen Systemen steigt der Aufwand hinsichtlich der Verkabelung der unterschiedlichen Baueinheiten.

Das Dokument EP 0 929 171 offenbart ein Bussystem nach dem Oberbegriff des Patentanspruchs 1.

Zur Lösung dieser Aufgabe ist das erfindungsgemäße Bussystem nach Patentanspruch 1.

Der besondere Vorteil des erfindungsgemäßen Bussystems besteht darin, dass insbesondere durch die Zwischenschaltung einer Übertragungseinheit zwischen Busteilnehmern auf der einen Seite und einem Versorgungsbus auf der anderen Seite die Anzahl der Leitungen wesentlich reduziert werden kann. Der Versorgungsbus besteht lediglich aus einer einzigen Versorgungsbusleitung, über die eine Versorgungsspannung, ein Synchronisationssignal und aufmodulierte Daten übertragen werden. Die Daten werden in einem Sendemodul einer Übertragungseinheit einem Trägersignal aufmoduliert und dem Versorgungsbus bereitgestellt. Zum Empfangen der Daten werden diese aus einem am Versorgungsbus anliegenden modulierten Trägersignal demoduliert und entsprechenden Anschlüssen der Busteilnehmer zur Verfügung gestellt. Nach der Erfindung sind die Übertragungseinheiten lediglich über den Versorgungsbus miteinander gekoppelt.

Nach der Erfindung weist die Übertragungseinheit zwei Sendemodule und zwei Empfangsmodule auf, wobei einem ersten Modulator des Sendemoduls und einem ersten Demodulator des Empfangsmoduls ein Trägersignal mit einer ersten Trägerfrequenz zur Verarbeitung von der Datenleitung zugeordneten Daten und wobei einem zweiten Modulator des Sendemoduls und einem zweiten Demodulator des Empfangsmoduls ein Trägersignal mit einer zweiten Trägerfrequenz zur Verarbeitung von der Taktleitung zugeordneten Daten zugeordnet sind. Vorteilhaft können hierdurch die für die Datenleitung und die Taktleitung der Busteilnehmer vorgesehenen Daten gleichzeitig verarbeitet werden.

Der besondere Vorteil des erfindungsgemäßen Verfahrens zur Datenübertragung über einen Bus zwischen mehreren Busteilnehmern besteht darin, dass zur Übertragung lediglich ein Versorgungsbus notwendig ist. Über diesen Versorgungsbus werden modulierten Daten übertragen, so dass der Verkabelungsaufwand reduziert werden kann.

Weitere Vorteile der Erfindung ergeben sich aus den weiteren Unteransprüchen.

Ein Ausführungsbeispiel der Erfindung wird nachfolgend anhand der Figuren näher erläutert.

Es zeigen:
- Figur 1: ein Blockschaltbild eines erfindungsgemäßen Bussystems mit einem Versorgungsbus, an dem mehrere Busteilnehmerjeweils über eine Übertragungseinheit angeschlossen sind,
- Figur 2: ein Blockschaltbild einer Spannungsversorgungseinheit, die an dem Versorgungsbus angeschlossen ist,

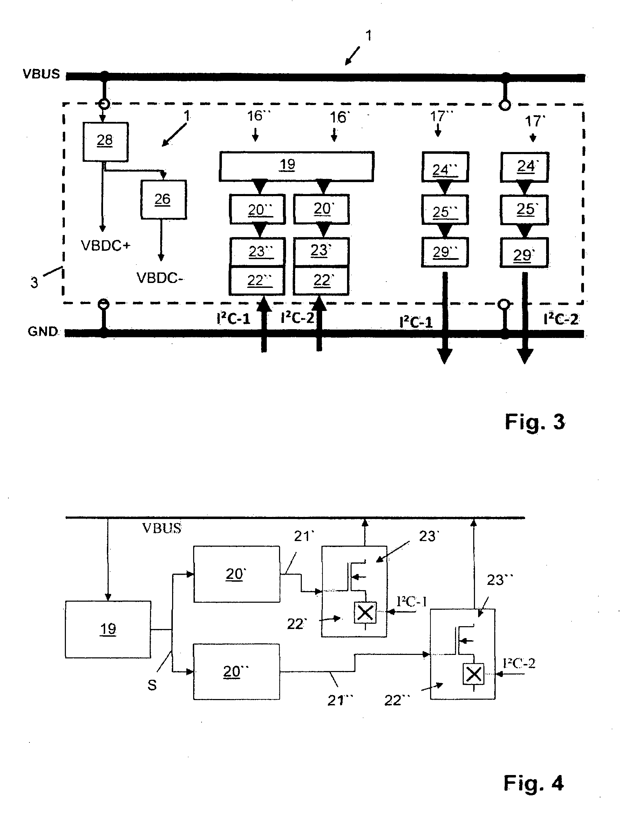

- Figur 3: ein Blockschaltbild der Übertragungseinheit, die an dem Versor- gungsbus angeschlossen ist,
- Figur 4: ein Blockschaltbild zweier Sendemodule der Übertragungseinheit und

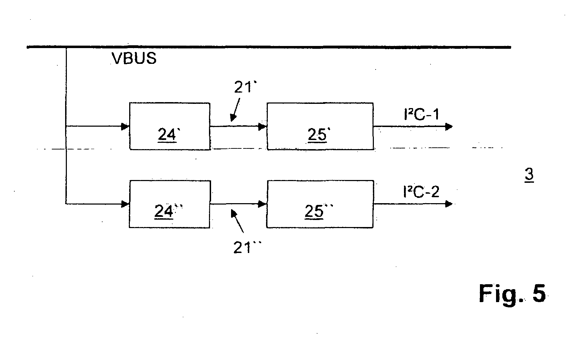

- Figur 5: ein Blockschaltbild zweier Empfangsmodule der Übertragungs- einheit.

Ein Bussystem für die Übertragung von Daten weist einen Versorgungsbus 1 auf, an dem zum einen eine Anzahl von Baueinheiten 2', 2" eines Gerätes jeweils über eine Übertragungseinheit 3 und an dem zum anderen eine Spannungsversorgungsbaueinheit 4 über eine Spannungsversorgungsanpassungseinheit 5 andererseits angeschlossen sind.

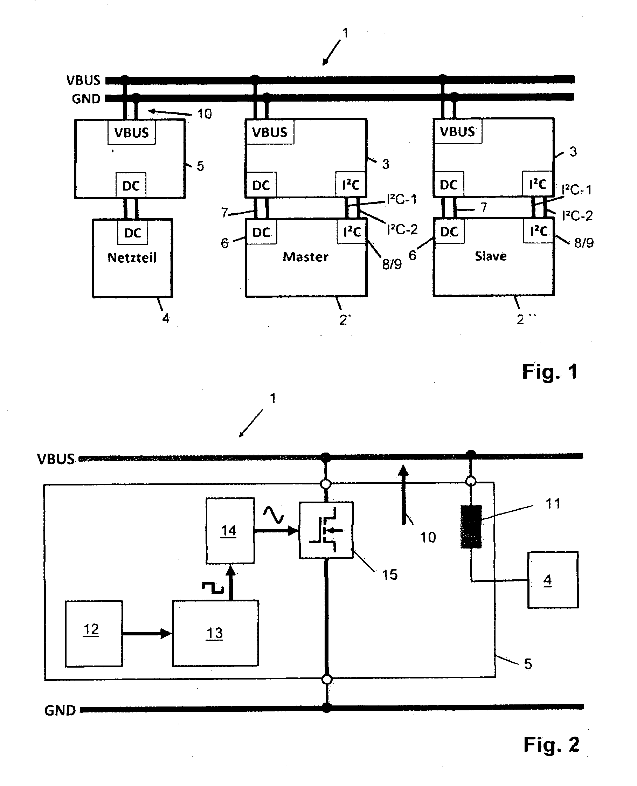

Die Baueinheiten 2', 2" bilden die Busteilnehmer des Bussystems, wobei beispielhaft in Figur 1 eine Master-Baueinheit 2' und eine Slave-Baueinheit 2" dargestellt sind. Diese Baueinheiten 2', 2" sind zur Kommunikation über den I²C-Bus (Inter-Integrated Circuit) ausgelegt und weisen einen Anschluss 6 für eine Spannungsversorgungsleitung 7 auf. Über diese Spannungsversorgungsleitung 7 wird eine Gleichspannung zur Versorgung der entsprechenden Baueinheit 2', 2" zur Verfügung gestellt. Zum anderen weisen die Baueinheiten 2', 2" jeweils einen Anschluss 8 für eine Datenleitung I²C-1 und einen Anschluss 9 für eine Taktleitung I²C-2 auf.

Die Spannungsversorgungsbaueinheit 4, die als handelsübliches Netzteil ausgebildet sein kann, stellt eine Versorgungsspannung von beispielsweise 5 V der Spannungsversorgungsanpassungseinheit 5 zur Verfügung.

Die Spannungsversorgungsanpassungseinheit 5 erzeugt ein Wechselspannungssignal 10, das in den Versorgungsbus 1 eingespeist wird. Das Wechselspannungssignal 10 enthält zum einen einen Gleichspannungsanteil, der durch die Versorgungsgleichspannung der Spannungsversorgungsbaueinheit 4 gebildet ist. Hierzu wird die Gleichspannung der Spannungsversorgungsanpassungseinheit 5 einer Spule 11 in den Bus 1 eingespeist. Der Versorgungsbus 1 besteht zum einen aus einer Masseleitung GND und zum anderen aus einer Versorgungsbusleitung VBUS.

Das Wechselspannungssignal 10 weist zum anderen einen Wechselspannungsanteil auf, so dass ein Synchronisationssignal S in den Versorgungsbus 1 eingeleitet werden kann. Aus dem Synchronisationssignal S kann in den Übertragungseinheiten 3 ein Trägersignal mit einer vorgegebenen Trägerfrequenz abgeleitet bzw. erzeugt werden. Zur Bildung des Synchronisationssignals S weist die Spannungsversorgungsanpassungseinheit 5 einen Quarzoszillator 12 auf, der eine Taktfrequenz von 5 MHz erzeugt. In einem nachgeschalteten Frequenzteiler 13 wird die Taktfrequenz auf 250 kHz reduziert. In einem nachgeschalteten Tiefpassfilter 14 wird das rechteckförmige Synchronisationssignal S in ein sinusförmiges Synchronisationssignal S umgewandelt. Die Einspeisung dieses Synchronisationssignals S erfolgt mittels einer Transistorschaltung 15, die mindestens einen FET-Transistor aufweist. Das in den Versorgungsbus 1 eingespeiste Wechselspannungssignal 10 setzt sich somit aus dem Synchronisationssignal S und der Versorgungsspannung zusammen.

Die Übertragungseinheit 3 besteht zum einen aus zwei gleichartig ausgebildeten Sendemodulen 16', 16", zwei gleichartig ausgebildeten Empfangsmodulen 17', 17" sowie einem Spannungsmodul 18. Ein erstes Sendemodul 16' und ein zweites Empfangsmodul 17' sind jeweils mit dem Anschluss 8 für die Datenleitung I²C-1 der Baueinheiten 2', 2" einerseits und ein zweites Sendemodul 16" und ein zweites Empfangsmodul 17" mit dem Anschluss 9 der Taktleitung I²C-2 der Baueinheiten 2', 2" andererseits verbunden. Das erste Sendemodul 16' und das erste Empfangsmodul 17' auf der einen Seite und das zweite Sendemodul 16" und das zweite Empfangsmodul 17" auf der anderen Seite unterscheiden sich im Wesentlichen dadurch, dass sie mit Trägersignalen unterschiedlicher Trägerfrequenz die am Eingang anstehenden Signale modulieren bzw. demodulieren. Hierdurch wird eine gleichzeitige Übertragung der der Datenleitung I²C-1 und der Datenleitung I²C-2 zugeordneten Daten ermöglicht. Die Sendemodule 16', 16" weisen jeweils ein gemeinsames Synchronisationsfilter 19 für die Filterung des Synchronisationssignals S vom Versorgungsbus 1 auf. Das Synchronisationsfilter 19 besteht aus einem Bandpassfilter, das aus dem an dem Versorgungsbus 1 anliegenden Trägersignal das Synchronisationssignal S mit einer Taktfrequenz von 250 kHz herausfiltert. Dieses Synchronisationssignal S wird einem ersten Frequenzsynthesizer 20' zur Erzeugung eines ersten Trägersignals 21' mit einer Trägerfrequenz von 2 MHz des ersten Sendemoduls 16' und einem zweiten Frequenzsynthesizer 20" zur Erzeugung eines zweiten Trägersignals 21" mit einer Trägerfrequenz von 4 MHz des zweiten Sendemoduls 16" zugeführt. Vorzugsweise sind die Frequenzsynthesizer 20', 20" als PLL-Frequenzsynthesizer ausgebildet. Die mittels der Frequenzsynthesizer 20', 20" erzeugten Trägerfrequenzen von 2 MHz und 4 MHz liegen als Rechteckspannungen vor und werden dann einem nicht dargestellten Tiefpassfilter zweiter Ordnung zugeführt, in dem sie in sinusförmige Trägersignale umgewandelt werden. Zur Modulation der über die Datenleitung I²C-1 bereitgestellten Daten weist das Sendemodul 16' einen ersten Modulator 22' auf, so dass die entsprechenden Daten auf das erste Trägersignal 21' aufmoduliert und dann einer ersten Einspeisungsschaltung 23' zugeführt werden. Die von der Taktleitung I²C-2 bereitgestellten Daten werden mittels eines zweiten Modulators 22" des zweiten Sendemoduls 16" auf das zweiten Trägersignal 21" aufmoduliert und einer entsprechenden Einspeiseschaltung 23" zur Einspeisung in den Versorgungsbus 1 zugeführt.

Als Modulationsverfahren wird die Amplitudentastung im OOK-Betrieb (OOK: On-Off-Keyling) verwendet.

Die Empfangsmodule 17', 17" weisen jeweils einen Bandpassfilter 24' bzw. 24" auf, wobei der erste Bandpassfilter 24' das Trägersignal 21' mit der ersten Trägerfrequenz und der zweite Bandpassfilter 24" das Trägersignal 21" mit der zweiten Trägerfrequenz aus dem Signal des Versorgungsbusses 1 herausfiltert. Den Bandpassfiltern 24', 24" sind jeweils ein Demodulator 25' bzw. 25" nachgeordnet, mittels derer die Nutzsignale bzw. Datensignale aus den Trägersignalen 21' bzw. 21" herausgetrennt und dann dieses über die Datenleitung I²C-1 bzw. der Taktleitung I²C-2 des entsprechenden Busteilnehmers 2', 2" zur Verfügung gestellt wird. Die Demodulatoren 25', 25" weisen jeweils einen Hüllkurvendetektor mit einem nachgeschalteten Tiefpass auf. Dem Tiefpass ist vorzugsweise ein Komparator 29', 29" nachgeschaltet, so dass ein entsprechendes rechteckförmiges Nutzsignal vorliegt.

Um eine bidirektionale Kommunikation zu ermögliche, wobei nur die LOW-Pegel des Datensignals ausgewertet werden, wird ein erster LOW-Pegel zum Senden des Datensignals und ein zweiter LOW-Pegelzustand zum Empfangen des Datensignals verwendet. Für das Senden kann beispielsweise ein Spannungsbereich von 0 V bis 0,4 V und für das Empfangen ein Spannungsbereich von 0,6 V bis 1,5 V festgelegt sein. Hierfür ist ein entsprechender Komparator den Einspeisungsschaltungen 23', 23" vorgelagert.

Das Spannungsmodul 18 ermöglicht die Generierung einer positiven und einer negativen Versorgungsspannung. Die negative Versorgungsspannung wird für den Betrieb der Bauteile des Sendemoduls 16', 16" bzw. Empfangsmoduls 17', 17" verwendet.

Zur Bereitstellung einer positiven Gleichspannung VBDC+ weist das Spannungsmodul 18 ein passives Tiefpassfilter 28 zweiter Ordnung auf, das vorzugsweise als RLC-Reihenschwingkreis ausgebildet ist. Hierdurch kann aus dem am Versorgungsbus 1 anliegenden Signal die positive Versorgungsspannung VBDC+ bereitgestellt werden. Eine negative Spannung VBDC- wird aus der positiven Spannung VBDC+ mittels eines Spannungsinverters 26 generiert.

Die von der Datenleitung 8 bzw. Taktleitung 9 bereitgestellten Daten werden in den Sendemodulen 16', 16" der Übertragungseinheit 3 auf ein Trägersignal aufmoduliert und als moduliertes Sendesignal auf den Versorgungsbus 1 übertragen.

Das so gebildete Bussystem ermöglicht einen breiten Anwendungsbereich. Beispielsweise können die Busteilnehmer 2', 2" als Baueinheiten eines Kassensystems oder eines Wertscheinautomaten ausgebildet sein.

### Bezugszeichenliste

- 1: Versorgungsbus
- 2', 2": Baueinheiten
- 3: Übertragungseinheit
- 4: Spannungsversorgungsbaueinheit
- 5: Spannungsversorgungsanpassungseinheit
- 6: Anschluss
- 7: Spannungsversorgungsleitung
- 8: Anschluss I²C-1
- 9: Anschluss I²C-2
- 10: Wechselspannungssignal
- 11: Spule
- 12: Quarzoszillator
- 13: Frequenzteiler
- 14: Tiefpassfilter
- 15: Transistorschaltung
- 16', 16": Sendemodul
- 17', 17": Empfangsmodul
- 18: Spannungsmodul
- 19: Synchronisationsfilter
- 20', 20": Frequenzsynthesizer
- 21', 21": Trägersignal
- 22', 22": Modulator
- 23', 23": Einspeisungsschaltung
- 24', 24": Bandpassfilter
- 25', 25": Demodulator
- 26: Spannungsinverter
- 27: Sendesignal
- 28: Tiefpassfilter
- 29: Komparator
- GND: Masseleitung
- S: Synchronisationssignal
- VBUS: Versorgungsbusleitung
- VBDC+: positive Versorgungsspannung
- VBDC-: negative Versorgungsspannung

## Patentansprüche

1. Bussystem für die Übertragung von Daten zwischen mindestens einem als eine Master-Baueinheit ausgebildeten ersten Busteilnehmer und mindestens einem als eine Slave-Baueinheit ausgebildeten zweiten Busteilnehmer, wobei die Busteilnehmer jeweils über einen Anschluss für eine Datenleitung, einen Anschluss für eine Taktleitung und einen Anschluss für eine Spannungsversorgungsleitung verfügen, wobei die Anschlüsse (8, 9) der Busteilnehmer (2', 2") jeweils über eine Übertragungseinheit (3) mit einem gemeinsamen Versorgungsbus (1) verbunden sind, dass die Übertragungseinheit (3) ein Sendemodul (16', 16") zur Übertragung der Daten von dem Anschluss (8, 9) der zugeordneten Busteilnehmer (2', 2") zu dem Versorgungsbus (1) und ein Empfangsmodul (17', 17") zur Übertragung der Daten von dem Versorgungsbus (1) zu dem Anschluss (8, 9) der zugeordneten Busteilnehmer (2', 2") aufweist, derart, dass die Daten zwischen den Busteilnehmern (2', 2") als modulierte Daten über den Versorgungsbus (1) übertragbar sind,
**dadurch gekennzeichnet, dass** die Übertragungseinheit (3) zwei Sendemodule (16', 16") und zwei Empfangsmodule (17', 17") aufweist, wobei ein erster Modulator (22') des ersten Sendemoduls (16') und ein erster Demodulator (25') des ersten Empfangsmoduls (17') ein Trägersignal mit einer ersten Trägerfrequenz zur Verarbeitung von der Datenleitung (I²C-1) zugeordneten Daten und wobei ein zweiter Modulator (22") des zweiten Sendemoduls (16") und ein zweiter Demodulator (25") des zweiten Empfangsmoduls (17") zur Verarbeitung von der Taktleitung (I²C-2) zugeordneten Daten vorgesehen sind.

2. Bussystem nach Anspruch 1, **dadurch gekennzeichnet, dass** in dem Sendemodul (16', 16") ein Trägersignal (21', 21 ") hoher Frequenz durch die als Folge von High- oder Low-Zuständen vorliegenden Daten zur Bildung eines Sendesignals aufmodulierbar ist.

3. Bussystem nach Anspruch 1 oder 2, **dadurch gekennzeichnet, dass** das Sendemodul (16', 16") derart ausgebildet ist, dass die Daten mittels einer digitalen Amplitudenmodulation modulierbar sind.

4. Bussystem nach einem der Ansprüche 1 bis 3, **dadurch gekennzeichnet, dass** die Busteilnehmer (2', 2") als Baueinheiten eines Kassensystems oder eines Geldautomaten ausgebildet sind.

## Claims

1. Bus system for the transmission of data between at least one first bus subscriber, in the form of a master unit, and at least one second bus subscriber, in the form of a slave unit, wherein the bus subscribers each have a connection for a data line, a connection for a clock line and a connection for a power supply line, wherein the connections (8, 9) of the bus subscribers (2', 2") are each connected to a shared supply bus (1) via a transmission unit (3), the transmission unit (3) having a sending module (16', 16") for transmitting the data from the connection (8, 9) of the associated bus subscribers (2', 2") to Lhe supply bus (1) and a receiving module (17', 17") for transmitting the data from the supply bus (1) to the connection (8, 9) of the associated bus subscribers (2', 2") such that the data can be transmitted between the bus subscribers (2', 2") as modulated data via the supply bus (1),
**characterized in that** the transmission unit (3) has two sending modules (16', 16") and two receiving modules (17', 17"), wherein a first modulator (22') of the first sending module (16') and a first demodulator (25') of the first receiving module (17') have an associated carrier signal at a first carrier frequency for processing data associated with the data line (I²C-1) and wherein a second modulator (22") of the second sending module (16") and a second demodulator (25") of the second receiving module (17") are provided for processing data associated with the clock line (I²C-2).

2. Bus system according to Claim 1, **characterized in that** the sending module (16', 16") can modulate a carrier signal (21', 21") at a high frequency with the data that are present as a series of high or low states in order to form a send signal.

3. Bus system according to Claim 1 or 2, **characterized in that** the sending module (16', 16") is designed such that the data can be modulated on using digital amplitude modulation.

4. Bus system according to one of Claims 1 to 3, **characterized in that** the bus subscribers (2', 2") are in the form of units of a cash register system or of an automated teller machine

## Revendications

1. Système de bus pour la transmission de données entre au moins un premier périphérique de bus configuré sous la forme d'un module maître et au moins un deuxième périphérique de bus configuré sous la forme d'un module esclave, les périphériques de bus disposant respectivement d'une connexion pour une ligne de données, d'une connexion pour une ligne d'horloge et d'une connexion pour une ligne d'alimentation électrique, les connexions (8, 9) des périphériques de bus (2', 2") étant respectivement reliées avec un bus d'alimentation commun (1) par le biais d'une unité de transmission (3), l'unité de transmission (3) présentant un module émetteur (16', 16") pour la transmission des données de la connexion (8, 9) des périphériques de bus (2', 2") associés vers le bus d'alimentation (1) et un module récepteur (17', 17") pour la transmission des données du bus d'alimentation (1) vers la connexion (8, 9) des périphériques de bus (2', 2") associés de telle sorte que les données peuvent être transmises entre les périphériques de bus (2', 2") sous la forme de données modulées par le biais du bus d'alimentation (1),
**caractérisé en ce que** l'unité de transmission (3) présente deux modules émetteurs (16', 16") et deux modules récepteurs (17', 17"), un premier modulateur (22') du premier module émetteur (16') et un premier démodulateur (25') du premier module récepteur (17') ayant un signal porteur associé ayant une première fréquence porteuse pour le traitement des données associées à la ligne de données (I²C-1), et un deuxième modulateur (22") du deuxième module émetteur (16") et un deuxième démodulateur (25") du deuxième module récepteur (17") étant prévus pour le traitement des données associées à la ligne d'horloge (I²C-2).

2. Système de bus selon la revendication 1, **caractérisé en ce que** dans le module émetteur (16', 16") peut être surmodulé un signal porteur (21', 21") de fréquente élevée par les données présentes sous la forme d'une séquence d'états hauts et d'états bas en vue de former un signal d'émission.

3. Système de bus selon la revendication 1 ou 2, **caractérisé en ce que** le module émetteur (16', 16") est réalisé de telle sorte que les données peuvent être surmodulées au moyen d'une modulation d'amplitude numérique.

4. Système de bus selon l'une des revendications 1 à 3, **caractérisé en ce que** les périphériques de bus (2', 2") sont réalisés sous la forme de modules d'un système de caisse ou d'un distributeur automatique de billets.
